# EUROPEAN PATENT APPLICATION

(11) **EP 1 838 001 A2**
(43) Date of publication of application: **26.09.2007**
(21) Application number: 06025147.7
(22) Date of filing: 05.12.2006
(51) Int. Cl.: H04B 1/04

(54) **Transmitter with continuous phase and amplitude processing**

(30) Priority: 24.03.2006 US 388822; 26.07.2006 US 493730
(71) Applicant: Broadcom Corporation, Irvine, CA 92617 (US)
(72) Inventor: Rofougaran, Ahmadreza (Reza), Irvine California 92618-7013 (US)
(74) Representative: Jehle, Volker Armin

(57) **Abstract**

A transmitter includes a conversion module, a modulation parameter module, first and second up-conversion modules, a combining module, and a power amplifier circuit. The conversion module is coupled to convert a wireless protocol formatted signal into a normalized in-phase (I) symbol and a normalized quadrature (Q) symbol. The modulation parameter module is coupled to generate offset information and transmit property information. The up-conversion modules are coupled to generate up-conversion signals based on the normalized I symbol, the normalized Q symbol an in-phase local oscillation, and the offset information. The combining module is coupled to combine the up-conversion signals to produce a radio frequency (RF) signal. The power amplifier circuit is coupled to transmit the RF signal based on the transmit property information to produce a modulated RF signal.

## Description

### CROSS REFERENCE TO RELATED PATENTS

This patent application is claiming priority under 35 USC § 120 as a continuation-in-part patent application of co-pending patent application entitled HYBRID RADIO FREQUENCY TRANSMITTER, having a filing date of 3/24/06, and a serial number of 11/388,822.

### STATEMENT REGARDING FEDERALLY SPONSORED RESEARCH OR DEVELOPMENT - NOT APPLICABLE

### INCORPORATION-BY-REFERENCE OF MATERIAL SUBMITTED ON A COMPACT DISC - NOT APPLICABLE

### BACKGROUND OF THE INVENTION

### TECHNICAL FIELD OF THE INVENTION

This invention relates generally to communication systems and more particularly to radio frequency transmitters used in such communication systems.

### DESCRIPTION OF RELATED ART

Communication systems are known to support wireless and wire lined communications between wireless and/or wire lined communication devices. Such communication systems range from national and/or international cellular telephone systems to the Internet to point-to-point in-home wireless networks. Each type of communication system is constructed, and hence operates, in accordance with one or more communication standards. For instance, wireless communication systems may operate in accordance with one or more standards including, but not limited to, IEEE 802.11, Bluetooth, advanced mobile phone services (AMPS), digital AMPS, global system for mobile communications (GSM), code division multiple access (CDMA), local multi-point distribution systems (LMDS), multi-channel-multi-point distribution systems (MMDS), radio frequency identification (RFID), and/or variations thereof.

Depending on the type of wireless communication system, a wireless communication device, such as a cellular telephone, two-way radio, personal digital assistant (PDA), personal computer (PC), laptop computer, home entertainment equipment, RFID reader, RFID tag, et cetera communicates directly or indirectly with other wireless communication devices. For direct communications (also known as point-to-point communications), the participating wireless communication devices tune their receivers and transmitters to the same channel or channels (e.g., one of the plurality of radio frequency (RF) carriers of the wireless communication system or a particular RF frequency for some systems) and communicate over that channel(s). For indirect wireless communications, each wireless communication device communicates directly with an associated base station (e.g., for cellular services) and/or an associated access point (e.g., for an in-home or in-building wireless network) via an assigned channel. To complete a communication connection between the wireless communication devices, the associated base stations and/or associated access points communicate with each other directly, via a system controller, via the public switch telephone network, via the Internet, and/or via some other wide area network.

For each wireless communication device to participate in wireless communications, it includes a built-in radio transceiver (i.e., receiver and transmitter) or is coupled to an associated radio transceiver (e.g., a station for in-home and/or in-building wireless communication networks, RF modem, etc.). As is known, the receiver is coupled to the antenna and includes a low noise amplifier, one or more intermediate frequency stages, a filtering stage, and a data recovery stage. The low noise amplifier receives inbound RF signals via the antenna and amplifies then. The one or more intermediate frequency stages mix the amplified RF signals with one or more local oscillations to convert the amplified RF signal into baseband signals or intermediate frequency (IF) signals. The filtering stage filters the baseband signals or the IF signals to attenuate unwanted out of band signals to produce filtered signals. The data recovery stage recovers raw data from the filtered signals in accordance with the particular wireless communication standard.

As is also known, the transmitter includes a data modulation stage, one or more intermediate frequency stages, and a power amplifier. The data modulation stage converts raw data into baseband signals in accordance with a particular wireless communication standard. The one or more intermediate frequency stages mix the baseband signals with one or more local oscillations to produce RF signals. The power amplifier amplifies the RF signals prior to transmission via an antenna.

Wideband code division multiple access (WCDMA) and Enhanced Data rates for GSM Evolution (EDGE) are two standard wireless protocols getting a great deal of attention. As is known, WCDMA is a third generation (3G) CDMA standard that has a minimum frequency band requirement of 2x5MHz, carrier spacing of 4.4-5.2 MHz, maximum number of voice channels on 2x5MHz is 196 for a spreading factor of 256, uplink frequency band of 1920 - 1980 MHz, a downlink frequency band of 2110 - 2170 MHz, QPSK modulation, etc.

As is further known, EDGE is an improvement of Global System for Mobile (GSM) technology that allows consumers to use cellular handsets, PC cards, PDAs and other wireless devices to connect to the Internet at data rates up to four times faster than existing GSM and GPRS (General Packet Radio Service) wireless devices. Particular aspects of EDGE include data rates of 384 Kbps and above, 8-PSK (phase shift keying) or GMSK (Gaussian minimum shift keying) modulation, uplink transmission frequency band of 890-915 MHz, and a downlink transmission band of 935-960 MHz, etc.

As is also known, a PSK modulator (which includes QPSK and 8-PSK) includes a phase locked loop (PLL) to modulate and up-convert baseband data. In general, the data is injected into a fractional N divider of the PLL to produce a PSK modulated signal at a desired carrier frequency. One issue with this approach is that the bandwidth of a PLL is typically less than 1 MHz. Thus, such a PSK modulator is unusable for wireless communications that have channel widths greater than 1 MHz (e.g., WCDMA).

To overcome this issue, the data may be further injected into a voltage controlled oscillator (VCO) of the PLL. In this instance, the VCO functions like a high pass filter (HPF) with respect to the data and the fractional N divider functions as a low pass filter (LPF) with respect to the data. By aligning the corner frequencies of the HPF and the LPF, the bandwidth of the PLL is increased, but at the cost of circuit complexity, reduced filtering, and a stringent calibration process to achieve and maintain alignment.

Another issue with PLL based PSK modulators is the resulting radio frequency (RF) signal has a discontinuous phase, which produces an undesired envelope. In lower data rate applications, the undesired envelope has minimal adverse effects, however, as the data rate increases, the adverse effects of the undesired envelope increases.

Therefore, a need exists for a wideband transmitter that avoids some or all of the disadvantaged associated with a PSK modulator.

### BRIEF SUMMARY OF THE INVENTION

The present invention is directed to apparatus and methods of operation that are further described in the following Brief Description of the Drawings, the Detailed Description of the Invention, and the claims.

According to an aspect of the invention, a transmitter comprises:
a conversion module coupled to convert a wireless protocol formatted signal into a normalized in-phase (I) symbol and a normalized quadrature (Q) symbol;
a modulation parameter module coupled to generate offset information and transmit property information from the wireless protocol formatted signal;
a first up-conversion module coupled to generate a first up-conversion signal based on the normalized I symbol, an in-phase local oscillation, and the offset information;
a second up-conversion module coupled to generate a second up-conversion signal based on the normalized Q symbol, a quadrature local oscillation, and the offset information;
a combining module coupled to combine the first and second up-conversion signals to produce a radio frequency (RF) signal; and
a power amplifier circuit coupled to transmit the RF signal based on the transmit property information to produce a modulated RF signal.

Advantageously, the transmitter further comprises:
a baseband processing module coupled to convert outbound data into the wireless protocol formatted signal in accordance with a wireless communication protocol.

Advantageously, the wireless communication protocol comprises at least one of:
at least one version of code division multiple access;
at least one version of IEEE 802.11;
at least one version of Bluetooth;
at least one version of phase shift keying; and
at least one version of minimum shift keying.

Advantageously, the offset information comprises at least one of:
phase information; and
frequency information.

Advantageously, the transmitter further comprises:
the phase information including phase modulation data; and
the frequency information including at least one of: frequency modulation data, frequency hopping data, and channel selection data.

Advantageously, the transmit property information comprises at least one of:
amplitude modulation data; and
power control data.

According to an aspect of the invention, a transmitter comprises:
a baseband processing module coupled to produce normalized modulated symbol data, offset information, and transmit property information based on outbound data;
an up-conversion module coupled to produce a radio frequency (RF) signal from the normalized modulated symbol data, a local oscillation, and the offset information; and
a power amplifier circuit operably coupled to transmit the RF signal based on the transmit property information to produce a modulated RF signal.

Advantageously, the baseband processing module derives the normalized modulated symbol data from the outbound data being initially processed in accordance with at least one of:
at least one version of code division multiple access;
at least one version of IEEE 802.11;
at least one version of Bluetooth;
at least one version of phase shift keying; and
at least one version of minimum shift keying.

Advantageously, the offset information comprises at least one of:
phase information; and
frequency information.

Advantageously, the transmitter further comprises:
the phase information including phase modulation data; and
the frequency information including at least one of: frequency modulation data, frequency hopping data, and channel selection data.

Advantageously, the transmit property information comprises at least one of:
amplitude modulation data; and
power control data.

According to an aspect of the invention, a wide bandwidth transmitter comprises:
a baseband processing module coupled to convert outbound data into code division multiple access WCDMA formatted data or Enhanced Data rates for GSM Evolution (EDGE) formatted data;
a conversion module coupled to convert the WCDMA formatted data or EDGE formatted data into a normalized in-phase (I) symbol and a normalized quadrature (Q) symbol;
a modulation parameter module coupled to generate offset information and transmit property information from the WCDMA formatted data or EDGE formatted data;
a first up-conversion module coupled to generate a first up-conversion signal based on the normalized I symbol, an in-phase local oscillation, and the offset information;
a second up-conversion module coupled to generate a second up-conversion signal based on the normalized Q symbol, a quadrature local oscillation, and the offset information;
a combining module coupled to combine the first and second up-conversion signals to produce a radio frequency (RF) signal; and
a power amplifier circuit coupled to transmit the RF signal based on the transmit property information to produce a modulated RF signal.

Advantageously, the offset information comprises at least one of:
phase information; and
frequency information.

Advantageously, the transmitter further comprises:
the phase information including phase modulation data; and
the frequency information including at least one of: frequency modulation data, frequency hopping data, and channel selection data.

Advantageously, the transmit property information comprises at least one of:
amplitude modulation data; and
power control data.

Other features and advantages of the present invention will become apparent from the following detailed description of the invention made with reference to the accompanying drawings.

### BRIEF DESCRIPTION OF THE SEVERAL VIEWS OF THE DRAWING(S)

Figure 1 is a schematic block diagram of a communication system in accordance with the present invention;
Figure 2 is a schematic block diagram of an embodiment of a wireless communication device in accordance with the present invention;
Figure 3 is a schematic block diagram of another embodiment of a wireless communication device in accordance with the present invention;
Figure 4 is a schematic block diagram of an embodiment of a transmitter in accordance with the present invention;
Figure 5 is a diagram of an example of converting data into normalized modulated data, offset information, and transmit property information in accordance with the present invention;
Figure 6 is a functional diagram of an embodiment of a transmitter in accordance with the present invention;
Figure 7 is a schematic block diagram of another embodiment of a transmitter in accordance with the present invention; and
Figure 8 is a schematic block diagram of an embodiment of a transmitter in accordance with the present invention.

### DETAILED DESCRIPTION OF THE INVENTION

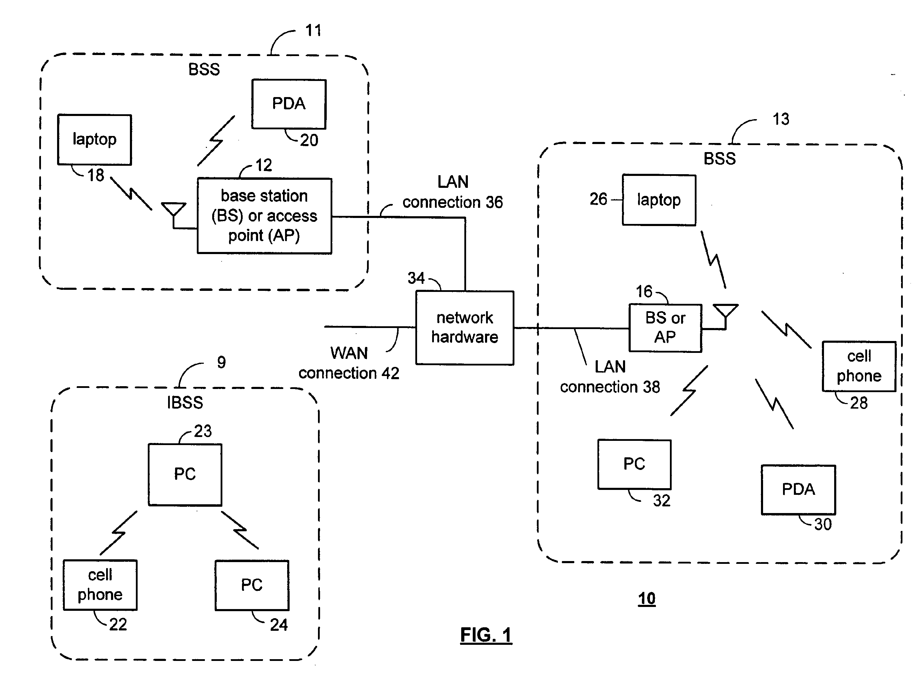

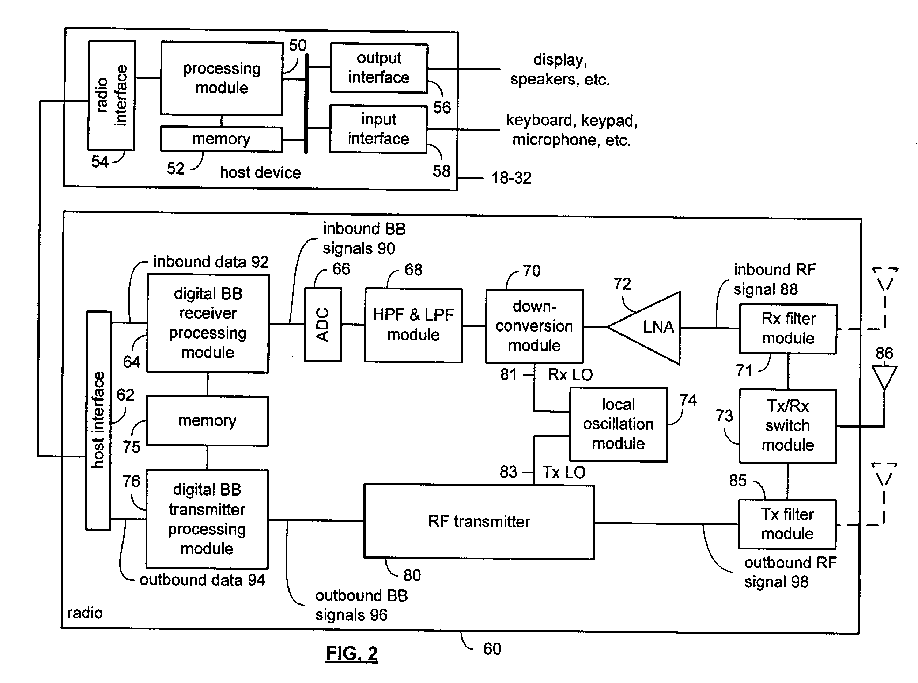

Figure 1 is a schematic block diagram illustrating a communication system 10 that includes a plurality of base stations and/or access points 12, 16, a plurality of wireless communication devices 18-32 and a network hardware component 34. Note that the network hardware 34, which may be a router, switch, bridge, modem, system controller, et cetera provides a wide area network connection 42 for the communication system 10. Further note that the wireless communication devices 18-32 may be laptop host computers 18 and 26, personal digital assistant hosts 20 and 30, personal computer hosts 24 and 32 and/or cellular telephone hosts 22 and 28. The details of the wireless communication devices will be described in greater detail with reference to Figure 2.

Wireless communication devices 22, 23, and 24 are located within an independent basic service set (IBSS) area and communicate directly (i.e., point to point). In this configuration, these devices 22, 23, and 24 may only communicate with each other. To communicate with other wireless communication devices within the system 10 or to communicate outside of the system 10, the devices 22, 23, and/or 24 need to affiliate with one of the base stations or access points 12 or 16.

The base stations or access points 12, 16 are located within basic service set (BSS) areas 11 and 13, respectively, and are operably coupled to the network hardware 34 via local area network connections 36, 38. Such a connection provides the base station or access point 12 16 with connectivity to other devices within the system 10 and provides connectivity to other networks via the WAN connection 42. To communicate with the wireless communication devices within its BSS 11 or 13, each of the base stations or access points 12-16 has an associated antenna or antenna array. For instance, base station or access point 12 wirelessly communicates with wireless communication devices 18 and 20 while base station or access point 16 wirelessly communicates with wireless communication devices 26-32. Typically, the wireless communication devices register with a particular base station or access point 12, 16 to receive services from the communication system 10.

Typically, base stations are used for cellular telephone systems and like-type systems, while access points are used for in-home or in-building wireless networks (e.g., IEEE 802.11 and versions thereof, Bluetooth, RFID, and/or any other type of radio frequency based network protocol). Regardless of the particular type of communication system, each wireless communication device includes a built-in radio and/or is coupled to a radio. Note that one or more of the wireless communication devices may include an RFID reader and/or an RFID tag.

Figure 2 is a schematic block diagram illustrating a wireless communication device that includes the host device 18-32 and an associated radio 60. For cellular telephone hosts, the radio 60 is a built-in component. For personal digital assistants hosts, laptop hosts, and/or personal computer hosts, the radio 60 may be built-in or an externally coupled component.

As illustrated, the host device 18-32 includes a processing module 50, memory 52, a radio interface 54, an input interface 58, and an output interface 56. The processing module 50 and memory 52 execute the corresponding instructions that are typically done by the host device. For example, for a cellular telephone host device, the processing module 50 performs the corresponding communication functions in accordance with a particular cellular telephone standard.

The radio interface 54 allows data to be received from and sent to the radio 60. For data received from the radio 60 (e.g., inbound data), the radio interface 54 provides the data to the processing module 50 for further processing and/or routing to the output interface 56. The output interface 56 provides connectivity to an output display device such as a display, monitor, speakers, et cetera such that the received data may be displayed. The radio interface 54 also provides data from the processing module 50 to the radio 60. The processing module 50 may receive the outbound data from an input device such as a keyboard, keypad, microphone, et cetera via the input interface 58 or generate the data itself. For data received via the input interface 58, the processing module 50 may perform a corresponding host function on the data and/or route it to the radio 60 via the radio interface 54.

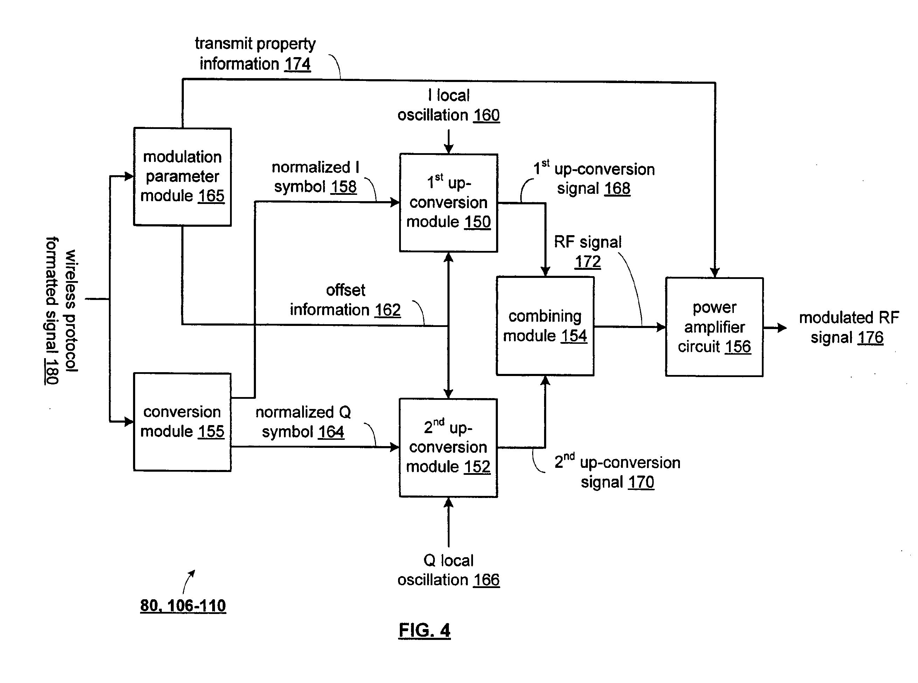

Radio 60 includes a host interface 62, a local oscillation module 74, memory 75, a receiver path, an RF transmitter path 80, and a transmit/receive switch module 71, which is coupled to antenna 86. The receiver path includes a receiver filter 71, a low noise amplifier 72, a down conversion module 70, a high pass and/or low pass filter module 68, an analog-to-digital converter 66, and a digital receiver processing module 64. The RF transmitter path 80 may include a digital transmitter processing module 76, a digital-to-analog converter, a filtering/gain module, an up conversion module, a power amplifier, and/or a transmitter filter module. The RF transmitter 80 will be described in greater detail with reference to Figures 4-8. The antenna 86 may be a single antenna that is shared by the transmit and receive paths as regulated by the Tx/Rx switch 73, or may include separate antennas for the transmit path and receive path. The antenna implementation will depend on the particular standard to which the wireless communication device is compliant.

The digital receiver processing module 64 and the digital transmitter processing module 76, in combination with operational instructions stored in memory 75, execute digital receiver functions and digital transmitter functions, respectively. The digital receiver functions include, but are not limited to, digital intermediate frequency to baseband conversion, demodulation, demapping, depuncturing, decoding, and/or descrambling. The digital transmitter functions include, but are not limited to, scrambling, encoding, puncturing, mapping, modulation, and/or digital baseband to IF conversion. The digital receiver and transmitter processing modules 64 and 76 may be implemented using a shared processing device, individual processing devices, or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory 75 may be a single memory device or a plurality of memory devices. Such a memory device may be a read-only memory, random access memory, volatile memory, non-volatile memory, static memory, dynamic memory, flash memory, and/or any device that stores digital information. Note that when the processing module 64 and/or 76 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

In operation, the radio 60 receives outbound data 94 from the host device via the host interface 62. The host interface 62 routes the outbound data 94 to the digital transmitter processing module 76, which processes the outbound data 94 in accordance with a particular wireless communication standard (e.g., IEEE 802.11, Bluetooth, RFID, WCDMA, EDGE, GSM, et cetera) to produce outbound baseband signals 96. The outbound baseband signals 96 will be digital base-band signals (e.g., have a zero IF) or a digital low IF signals, where the low IF typically will be in the frequency range of one hundred kilohertz to a few megahertz. Further processing of the outbound baseband signals 96 will be described with respect to one or more of Figures 4-8.

In general, the digital-to-analog converter converts the outbound baseband signals 96 from the digital domain to the analog domain. The filtering/gain module filters and/or adjusts the gain of the analog signals prior to providing it to the up-conversion mixing module. The up conversion mixing module, as will be subsequently described, converts the analog baseband or low IF signals into RF signals based on a transmitter local oscillation 83 provided by local oscillation module 74. The power amplifier amplifies the RF signals to produce outbound RF signals 98, which are filtered by the transmitter filter module. The antenna 86 transmits the outbound RF signals 98 to a targeted device such as a base station, an access point and/or another wireless communication device.

The radio 60 also receives inbound RF signals 88 via the antenna 86, which were transmitted by a base station, an access point, or another wireless communication device. The antenna 86 provides the inbound RF signals 88 to the receiver filter module 71 via the Tx/Rx switch 73, where the Rx filter 71 bandpass filters the inbound RF signals 88. The Rx filter 71 provides the filtered RF signals to low noise amplifier 72, which amplifies the signals 88 to produce an amplified inbound RF signals. The low noise amplifier 72 provides the amplified inbound RF signals to the down conversion mixing module 70, which converts the amplified inbound RF signals into an inbound low IF signals or baseband signals based on a receiver local oscillation 81 provided by local oscillation module 74. The down conversion module 70 provides the inbound low IF signals or baseband signals to the filtering/gain module 68. The high pass and low pass filter module 68 filters the inbound low IF signals or the inbound baseband signals to produce filtered inbound signals.

The analog-to-digital converter 66 converts the filtered inbound signals from the analog domain to the digital domain to produce inbound baseband signals 90, where the inbound baseband signals 90 will be digital base-band signals or digital low IF signals, where the low IF typically will be in the frequency range of one hundred kilohertz to a few megahertz.. The digital receiver processing module 64 decodes, descrambles, demaps, and/or demodulates the inbound baseband signals 90 to recapture inbound data 92 in accordance with the particular wireless communication standard being implemented by radio 60. The host interface 62 provides the recaptured inbound data 92 to the host device 18-32 via the radio interface 54.

As one of average skill in the art will appreciate, the wireless communication device of figure 2 may be implemented using one or more integrated circuits. For example, the host device may be implemented on one integrated circuit, the digital receiver processing module 64, the digital transmitter processing module 76 and memory 75 may be implemented on a second integrated circuit, and the remaining components of the radio 60, less the antenna 86, may be implemented on a third integrated circuit. As an alternate example, the radio 60 may be implemented on a single integrated circuit. As yet another example, the processing module 50 of the host device and the digital receiver and transmitter processing modules 64 and 76 may be a common processing device implemented on a single integrated circuit. Further, the memory 52 and memory 75 may be implemented on a single integrated circuit and/or on the same integrated circuit as the common processing modules of processing module 50 and the digital receiver and transmitter processing module 64 and 76.

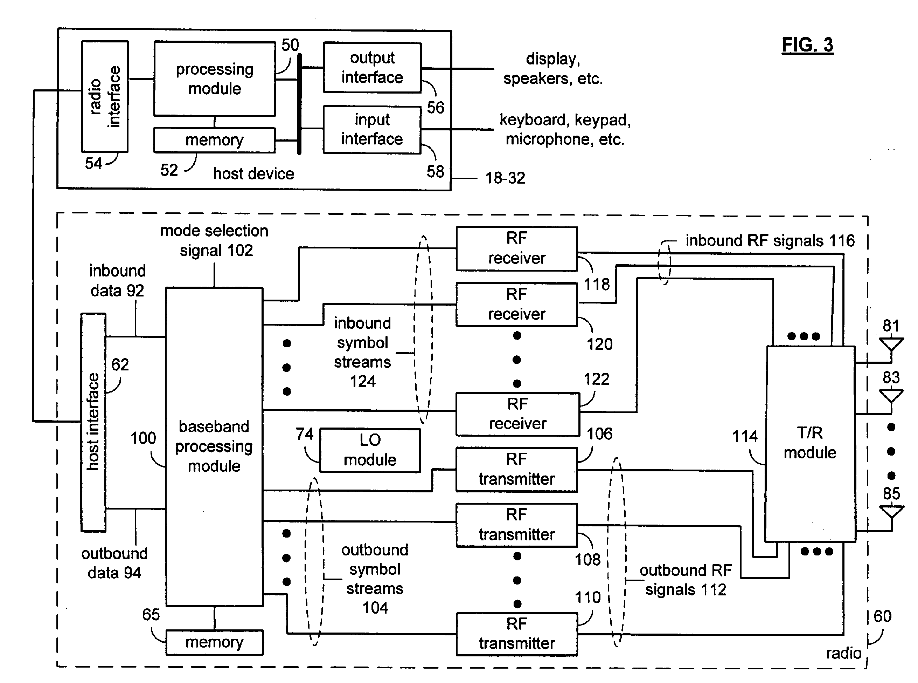

Figure 3 is a schematic block diagram illustrating a wireless communication device that includes the host device 18-32 and an associated radio 60. For cellular telephone hosts, the radio 60 is a built-in component. For personal digital assistants hosts, laptop hosts, and/or personal computer hosts, the radio 60 may be built-in or an externally coupled component.

As illustrated, the host device 18-32 includes a processing module 50, memory 52, radio interface 54, input interface 58 and output interface 56. The processing module 50 and memory 52 execute the corresponding instructions that are typically done by the host device. For example, for a cellular telephone host device, the processing module 50 performs the corresponding communication functions in accordance with a particular cellular telephone standard.

The radio interface 54 allows data to be received from and sent to the radio 60. For data received from the radio 60 (e.g., inbound data), the radio interface 54 provides the data to the processing module 50 for further processing and/or routing to the output interface 56. The output interface 56 provides connectivity to an output display device such as a display, monitor, speakers, et cetera such that the received data may be displayed. The radio interface 54 also provides data from the processing module 50 to the radio 60. The processing module 50 may receive the outbound data from an input device such as a keyboard, keypad, microphone, et cetera via the input interface 58 or generate the data itself. For data received via the input interface 58, the processing module 50 may perform a corresponding host function on the data and/or route it to the radio 60 via the radio interface 54.

Radio 60 includes a host interface 62, memory 64, a receiver path, a transmit path, a local oscillation module 74, and a transmit/receive module 114, which is coupled to a plurality of antennas 81 - 85. The receive path includes a baseband processing module 100 and a plurality of RF receivers 118 - 120. The transmit path includes baseband processing module 100 and a plurality of radio frequency (RF) transmitters 106 - 110. The baseband processing module 100, in combination with operational instructions stored in memory 65 and/or internally operational instructions, executes digital receiver functions and digital transmitter functions, respectively. The digital receiver functions include, but are not limited to, digital intermediate frequency to baseband conversion, demodulation, constellation demapping, depuncturing, decoding, de-interleaving, fast Fourier transform, cyclic prefix removal, space and time decoding, and/or descrambling. The digital transmitter functions include, but are not limited to, scrambling, encoding, puncturing, interleaving, constellation mapping, modulation, inverse fast Fourier transform, cyclic prefix addition, space and time encoding, and digital baseband to IF conversion. The baseband processing modules 100 may be implemented using one or more processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory 65 may be a single memory device or a plurality of memory devices. Such a memory device may be a read-only memory, random access memory, volatile memory, non-volatile memory, static memory, dynamic memory, flash memory, and/or any device that stores digital information. Note that when the processing module 100 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

In operation, the radio 60 receives outbound data 94 from the host device via the host interface 62. The baseband processing module 64 receives the outbound data 88 and, based on a mode selection signal 102, produces one or more outbound symbol Streams 90. The mode selection signal 102 will indicate a particular mode of operation that is compliant with one or more specific modes of the various IEEE 802.11, RFID, WCDMA, EDGE, GSM etc., standards. For example, the mode selection signal 102 may indicate a frequency band of 2.4 GHz, a channel bandwidth of 20 or 22. MHz and a maximum bit rate of 54 megabits-per-second. In this general category, the mode selection signal will further indicate a particular rate ranging from 1 megabit-per-second to 54 megabits-per-second. In addition, the mode selection signal will indicate a particular type of modulation, which includes, but is not limited to, Barker Code Modulation, BPSK, QPSK, CCK, 16 QAM and/or 64 QAM. The mode select signal 102 may also include a code rate, a number of coded bits per subcarrier (NBPSC), coded bits per OFDM symbol (NCBPS), and/or data bits per OFDM symbol (NDBPS). The mode selection signal 102 may also indicate a particular channelization for the corresponding mode that provides a channel number and corresponding center frequency. The mode select signal 102 may further indicate a power spectral density mask value and a number of antennas to be initially used for a MIMO communication.

The baseband processing module 100, based on the mode selection signal 102 produces one or more outbound symbol streams 104 from the outbound data 94. For example, if the mode selection signal 102 indicates that a single transmit antenna is being utilized for the particular mode that has been selected, the baseband processing module 100 will produce a single outbound symbol stream 104. Alternatively, if the mode select signal 102 indicates 2, 3 or 4 antennas, the baseband processing module 100 will produce 2, 3 or 4 outbound symbol streams 104 from the outbound data 94.

Depending on the number of outbound streams 104 produced by the baseband module 10, a corresponding number of the RF transmitters 106 - 110 will be enabled to convert the outbound symbol streams 104 into outbound RF signals 112. Each of the RF transmitters 106 - 110 may be implemented in accordance with the embodiments of Figures 4 - 8. The RF transmitters 106 - 110 provide the outbound RF signals 112 to the transmit/receive module 114, which provides each outbound RF signal to a corresponding antenna 81 - 85.

When the radio 60 is in the receive mode, the transmit/receive module 114 receives one or more inbound RF signals 116 via the antennas 81 - 85 and provides them to one or more RF receivers 118 - 122. The RF receiver 118 - 122 converts the inbound RF signals 116 into a corresponding number of inbound symbol streams 124. The number of inbound symbol streams 124 will correspond to the particular mode in which the data was received. The baseband processing module 100 converts the inbound symbol streams 124 into inbound data 92, which is provided to the host device 18-32 via the host interface 62.

As one of average skill in the art will appreciate, the wireless communication device of figure 3 may be implemented using one or more integrated circuits. For example, the host device may be implemented on one integrated circuit, the baseband processing module 100 and memory 65 may be implemented on a second integrated circuit, and the remaining components of the radio 60, less the antennas 81 - 85, may be implemented on a third integrated circuit. As an alternate example, the radio 60 may be implemented on a single integrated circuit. As yet another example, the processing module 50 of the host device and the baseband processing module 100 may be a common processing device implemented on a single integrated circuit. Further, the memory 52 and memory 65 may be implemented on a single integrated circuit and/or on the same integrated circuit as the common processing modules of processing module 50 and the baseband processing module 100.

Figure 4 is a schematic block diagram of a transmitter 80 and/or 106-110 that includes a conversion module 155, a modulation parameter module 165, a 1^{st} up-conversion module 150, a 2^{nd} up-conversion module 152, a combining module 154, and a power amplifier circuit 156. The modulation parameter module 165 and the conversion module 155, which may be implemented using separate processing modules, the same processing module, or part of the baseband processing module 76 and/or 100, receives a wireless protocol formatted signal 180. The wireless protocol formatted signal 180 may be the outbound baseband signal 96 of figure 2, the outbound symbol streams 104 of figure 3, and/or any baseband or near baseband signal that is modulated (e.g., spread spectrum coding, Walsh codes, WCDMA, frequency-hopping CDMA, BPSK, QPSK, 8-PSK or π/4-PSK, QAM, MSK and/or GMSK), encoded, mapped, punctured, scrambled, and/or interleaved in accordance with a wireless communication protocol.

The modulation parameter module 155 processes the wireless protocol formatted signal 180 to produce offset information 162 and transmit property information 174. The offset information 162 includes phase information and/or frequency information. The phase information may include phase modulation data corresponding to a phase and/or amplitude modulation scheme (e.g., QPSK, 8-PSK or π/4-PSK, QAM, etc.). The frequency information may include frequency modulation (e.g., FSK, etc.), frequency hopping information (e.g., as defined by Bluetooth, CDMA, etc.), and/or channel select information. The transmit property information 174 may include amplitude modulation data in accordance with an amplitude module scheme (e.g., AM, QPSK, 8-PSK or π/4-PSK, QAM, etc.) and/or power control data corresponding to a desired transmit power level.

The conversion module 155 converts the wireless protocol formatted signal 180 into a normalized I symbol 158 and a normalized Q symbol 164. In one embodiment, the wireless protocol formatted signal 180 includes one or more symbols that include an I component and a Q component. In the time domain, the I component may be expressed as A_{I}cos(ω_{dn}) and the Q component may be expressed as A_{Q}sin(ω_{dn}), where A_{I} is the amplitude of the I component, A_{Q} is the amplitude of the Q component, and ω_{dn} is the radian of the symbol. The conversion module 155 converts each of the I and Q components to have a normalized magnitude, which may be 1 or any other desired value, to produce cos(ω_{dn}) for the normalized I component and sin(ω_{dn}) for the normalized Q component.

The 1^{st} up-conversion module 150 mixes the normalized I symbol 158 with an I local oscillation 160 based on the offset information 162 to produce a 1^{st} up-conversion signal 168. For example, if the offset information 162 corresponds to phase modulation data (e.g., Φₙ = tan⁻¹(A_{Q}/A_{I})), then the 1^{st} up-conversion signal 168 may be expressed as ½ cos(ω_{RF} - ω_{dn} - Φₙ) + ½ cos(ω_{RF} + ω_{dn} + Φₙ). As an alternative example, if the offset information 162 corresponds to frequency modulation data (e.g., Δf), then the 1^{st} up-conversion signal 168 may be expressed as ½ cos(ω_{RF} - ω_{dn} - Δf) + ½ cos(ω_{RF} + ω_{dn} + Δf).

The 2^{nd} up-conversion module 152 mixes the normalized Q symbol 164 with a Q local oscillation 166 based on the offset information 162 to produce a 2^{nd} up-conversion signal 170. For example, if the offset information 162 corresponds to phase modulation data (e.g., Φₙ = tan⁻¹(A_{Q}/A_{I})), then the 2^{nd} up-conversion signal 170 may be expressed as ½ cos(ω_{RF} - ω_{dn} - Φₙ) - ½ cos(ω_{RF} + ω_{dn} + Φₙ). As an alternative example, if the offset information 162 corresponds to frequency modulation data (e.g., Δf), then the 2^{nd} up-conversion signal 170 may be expressed as ½ cos(ω_{RF} - ω_{dn} - Δf) - ½ cos(ω_{RF} + ω_{dn} + Δf).

The combining module 154 combines the 1^{st} and 2^{nd} up-conversion signals 168 and 170 to produce an RF signal 172. For instance, the combining module may subtract the 2^{nd} up-conversion signal 170 from the 1^{st} up-conversion signal 160 to produce the RF signal 172. From the above examples, ½ cos(ω_{RF} - ω_{dn} - Φₙ) + ½ cos(ω_{RF} + ω_{dn} + Φₙ) - [½ cos(ω_{RF} - ω_{dn} - Φₙ) - ½ cos(ω_{RF} + ω_{dn} + Φₙ)] = cos(ω_{RF} + ω_{dn} + Φₙ).

The power amplifier circuit 156 amplifies the RF signal 172 based on the transmit property information 174 to produce the modulated RF signal. For example, if the transmit property information 174 corresponds to amplitude information (e.g., A = square root of (A_{I}² + A_{Q}²)), then the power amplifier circuit 156 amplifies the RF signal 172 (e.g., cos(ω_{RF} + ω_{dn} + Φₙ) by A to produce the modulated RF signal 176 (e.g., Acos(ω_{RF} + ω_{dn} + Φₙ)).

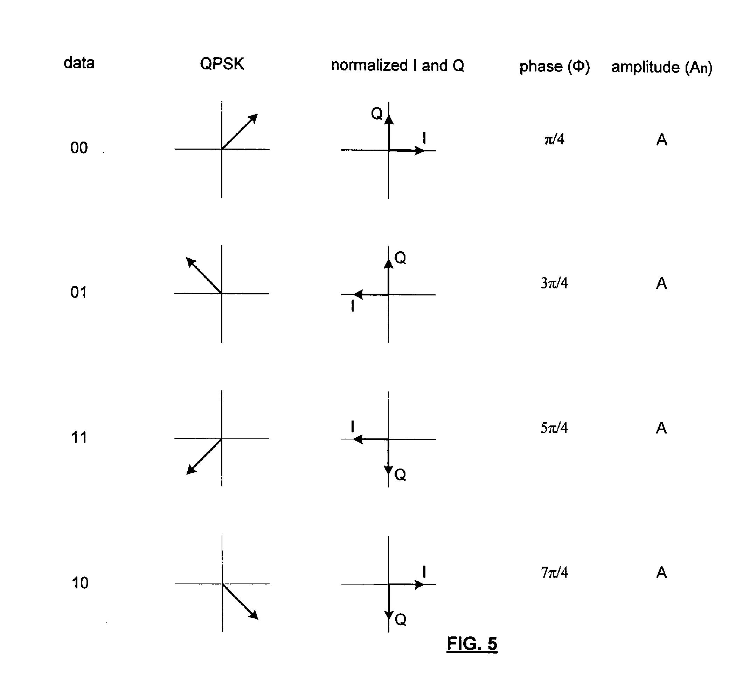

Figure 5 is a diagram of an example of converting QPSK encoded data into the normalized I and Q signals 158 and 164, the offset information 162, and the transmit property information 174. As shown, a data value of 00 may be a QPSK vector having a magnitude of A and a phase of π/4. For this data value, the QPSK vector includes an I component, which may be expressed as A_{I}cos(ω_{dn}), and Q component, which may be expressed as A_{Q}sin(ω_{dn}). The I and Q components are normalized to have a desired magnitude (e.g., 1) such that the resulting normalized I component may be expressed as cos(ω_{dn}) and the normalized Q component may be expressed as sin(ω_{dn}). The magnitude of A may be computed as the square root of (A_{I}² + A_{Q}²) and the phase Φₙ may be computed based on tan⁻¹(A_{Q}/A_{I}).

For a data value of 01, the QPSK vector includes an I component, which may be expressed as -A_{I}cos(ω_{dn}), and Q component, which may be expressed as A_{Q}sin(ω_{dn}). The I and Q components are normalized to have a desired magnitude (e.g., 1) such that the resulting normalized I component may be expressed as -cos(ω_{dn}) and the normalized Q component may be expressed as sin(ω_{dn}). The magnitude of A may be computed as the square root of ((-A_{I})² + A_{Q}²) and the phase Φₙ may be computed based on tan⁻¹(A_{Q}/-A_{I}), which equals 3π/4.

For a data value of 11, the QPSK vector includes an I component, which may be expressed as -A_{I}cos(ω_{dn}), and Q component, which may be expressed as -A_{Q}sin(ω_{dn}). The I and Q components are normalized to have a desired magnitude (e.g., 1) such that the resulting normalized I component may be expressed as -cos(ω_{dn}) and the normalized Q component may be expressed as -sin(ω_{dn}). The magnitude of A may be computed as the square root of ((-A_{I})² + (-A_{Q})²) and the phase Φₙ may be computed based on tan⁻¹(-A_{Q}/-A_{I}), which equals 5π/4.

For a data value of 10, the QPSK vector includes an I component, which may be expressed as A_{I}cos(ω_{dn}), and Q component, which may be expressed as -A_{Q}sin(ω_{dn}). The I and Q components are normalized to have a desired magnitude (e.g., 1) such that the resulting normalized I component may be expressed as cos(ω_{dn}) and the normalized Q component may be expressed as -sin(ω_{dn}). The magnitude of A may be computed as the square root of (A_{I}² + (-A_{Q})²) and the phase Φₙ may be computed based on tan⁻¹(-A_{Q}/A_{I}), which equals 7π/4.

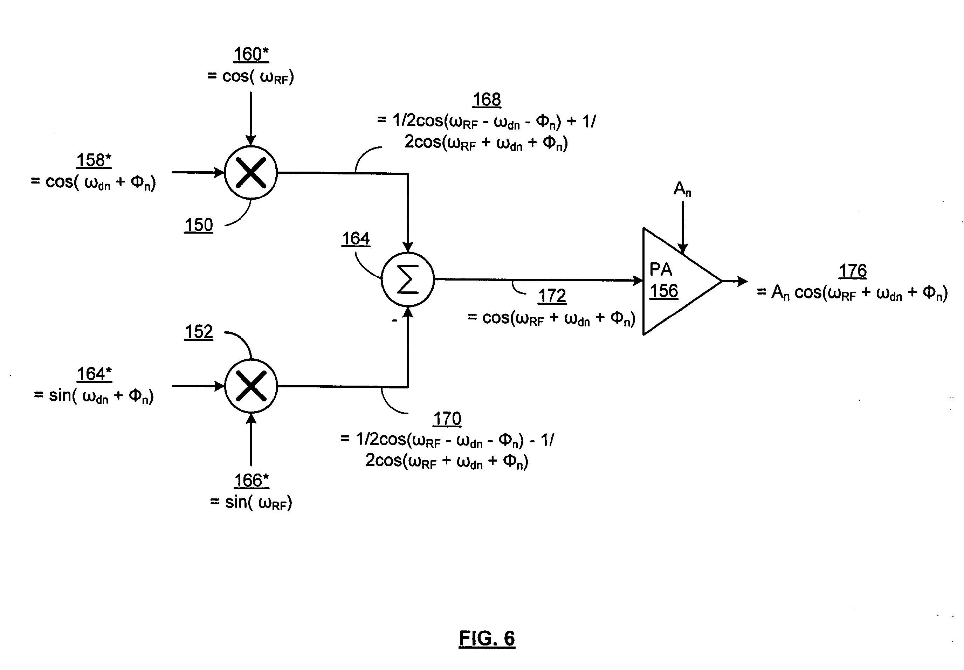

Figure 6 is a functional diagram of an embodiment of a transmitter that includes a first mixer as at least part of the 1^{st} up-conversion module 150, a second mixer as at least part of the 2^{nd} up-conversion module 152, a subtraction module as the combining module 154, and the power amplifier circuit 156. In this embodiment, the normalized I symbol 158^{*} is expressed as cos(ω_{dn} + Φₙ) and the normalized Q symbol 164^{*} is expressed as sin(ω_{dn} + Φₙ), where ω_{dn} represents the frequency of the mapped and interleaved data and Φₙ represents the phase information 162. For example, ω_{dn} may correspond to the frequency of a subcarrier of an OFDM signal, where n represents the number of the subcarrier. Further, the OFDM signal may include a 20 MHz wide channel consisting of 64 subcarrier frequencies, where the subcarriers are frequency spaced by 312.5 KHz. Thus, for subcarrier number 10, ω_{d10} represents 2*π* 10*312.5 KHz.

As an example, the normalized I and Q symbols 158^{*} and 164^{*} may be generated from I and Q components. For example, if an encoded value of 10 01 is mapped to an I value of 10 and a Q value of 01 then, for Cartesian coordinates, the time domain I signal component may be expressed as A_{I}cos(ω_{dn}) and the time domain Q component may be expressed as A_{Q}sin(ω_{dn}), where A_{I} is based on 10 and A_{Q} is based on 01. The magnitude of the time domain I and Q signal components may be normalized or adjusted to unity, or other desired value, to produce cos(ω_{dn}) and sin(ω_{dn}), respectively. The phase information (Φₙ) may be generated from the magnitudes of the original I and Q signal components based on tan⁻¹(A_{Q}/A_{I}). The phase information is then used to adjust the unity amplitude I and Q signals to produce the normalized I and Q symbols 158^{*} and 164^{*} of Figure 6.

The I local oscillation 160* is represented as cos(ω_{RF}) and the Q local oscillation 166^{*} is represented as sin(ω_{RF}), where ω_{RF} represents the frequency of one or more local oscillation stages. For a direct conversion transmitter, ω_{RF} corresponds to the frequency of the RF signal 172. The first mixer mixes the normalized I symbol 158^{*} with the I local oscillation 160* to produce the 1^{st} up-conversion signal 168, which may be expressed as ½ cos(ω_{RF} - ω_{dn} - Φₙ) + ½ cos(ω_{RF} + ω_{dn} + Φₙ). The second mixer mixes the normalized Q symbol 164^{*} with the Q local oscillation 166* to produce the second up-conversion signal 170, which may be expressed as ½ cos(ω_{RF} - ω_{dn} - Φₙ) - ½ cos(ω_{RF} + ω_{dn} + Φₙ).

When the first and second up-conversions signals 168 and 170 are combined, the resulting RF signal 172 may be expressed as cos(ω_{RF} + ω_{dn} + Φₙ). The power amplifier circuit 156 adjusts the amplitude of the RF signal 172 based on the amplitude information (An) 174 to produce the amplitude and phase modulated RF signal 176, which may be expressed as Aₙ cos(ω_{RF} + ω_{dn} + Φₙ).

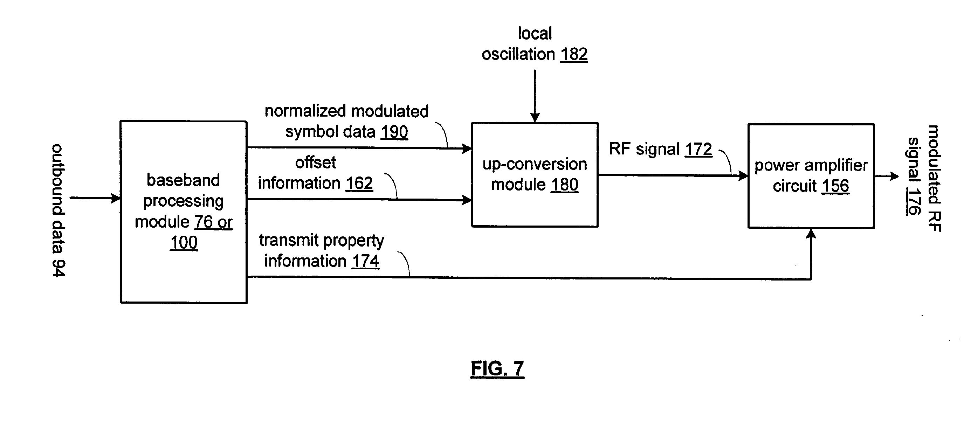

Figure 7 is a schematic block diagram of another embodiment of a transmitter that includes the baseband processing module 76 or 100, an up-conversion module 180, and the power amplifier circuit 156. The baseband processing module 76 or 100 functions to convert outbound data 94 into normalized modulated system data 190, the offset information 190, and the transmit property information 174. The up-conversion module 180 mixes the normalized modulated symbol data 190 with a local oscillation 182 based on the offset information 162 to produce the RF signal 172. The power amplifier circuit 156 amplifies the RF signal 172 in accordance with the transmit property information 174 to produce the modulated RF signal 176.

In one embodiment, the baseband processing module 76 or 100 converts the outbound data 94 directly into the normalized modulated symbol data 190, the offset information 162, and the transmit property information 174. For example, for QPSK encoded data, the digital values of 00, 01, 11, and 10 may be directly converted to normalized I and Q symbols as the normalized modulated symbol data 190, the phase information (Φₙ), and the amplitude (An) without generating I and Q signals and determining the information therefrom. Note that the direct conversion to the normalized modulated symbol data 190, the offset information 162, and the transmit property information 174 may be done by a look up table, a state diagram, and/or by executing operational instructions.

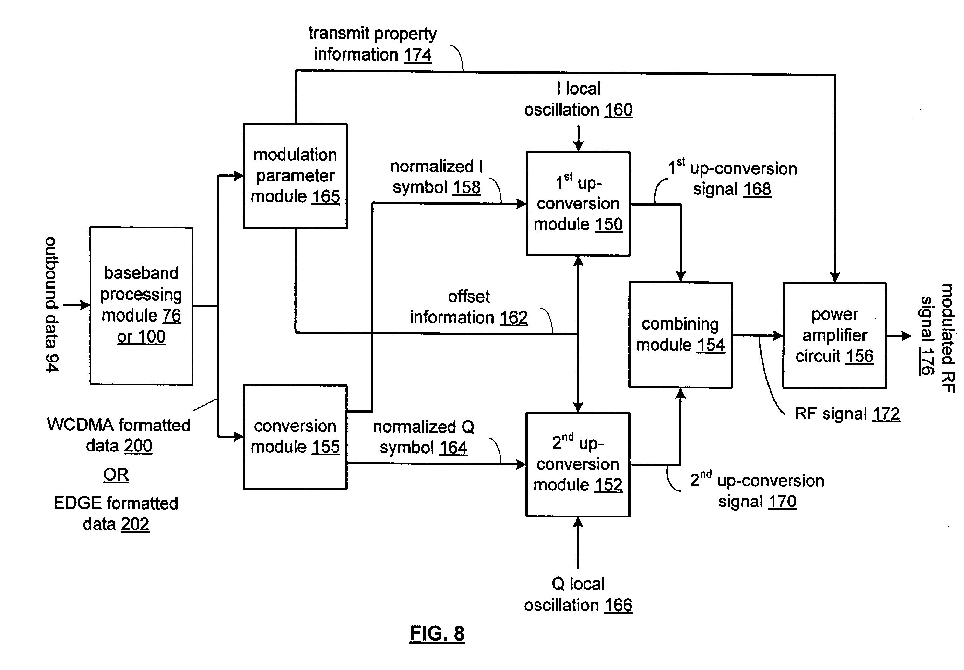

Figure 8 is a schematic block diagram of a transmitter 80 and/or 106-110 that includes the baseband processing module 76 or 100, the conversion module 155, the modulation parameter module 165, the 1^{st} up-conversion module 150, the 2^{nd} up-conversion module 152, the combining module 154, and the power amplifier circuit 156. The baseband processing module 76 or 100 converts the outbound data 94 into WCDMA formatted data 200 and/or to EDGE formatted data 202.

The modulation parameter module 165 and the conversion module 155 receive the WCDMA formatted data 200 and/or to EDGE formatted data 202. The modulation parameter module 155 processes the WCDMA formatted data 200 and/or to EDGE formatted data 202 to produce offset information 162 and transmit property information 174. The offset information 162 includes phase information that corresponds to a phase and/or amplitude modulation scheme (e.g., QPSK, 8-PSK or π/4-PSK, GMSK, etc.). The transmit property information 174 may include amplitude modulation data in accordance with an amplitude module scheme (e.g., AM, QPSK, 8-PSK or π/4-PSK, QAM, etc.) and/or power control data corresponding to a desired transmit power level.

The conversion module 155 converts the WCDMA formatted data 200 and/or to EDGE formatted data 202 into a normalized I symbol 158 and a normalized Q symbol 164. In the time domain, the I component may be expressed as A_{I}cos(ω_{dn}) and the Q component may be expressed as A_{Q}sin(ω_{dn}), where A_{I} is the amplitude of the I component, A_{Q} is the amplitude of the Q component, and ω_{dn} is the radian of the symbol. The conversion module 155 converts each of the I and Q components to have a normalized magnitude, which may be 1 or any other desired value, to produce cos(ω_{dn}) for the normalized I component and sin(ω_{dn}) for the normalized Q component.

The 1s^{t} up-conversion module 150 mixes the normalized I symbol 158 with an I local oscillation 160 based on the offset information 162 to produce a 1^{st} up-conversion signal 168. For example, if the offset information 162 corresponds to phase modulation data (e.g., Φₙ = tan⁻¹(A_{Q}/A_{I})), then the 1^{st} up-conversion signal 168 may be expressed as ½ cos(ω_{RF} - ω_{dn} - Φₙ) + ½ cos(ω_{RF} + ω_{dn} + Φₙ). The 2^{nd} up-conversion module 152 mixes the normalized Q symbol 164 with a Q local oscillation 166 based on the offset information 162 to produce a 2^{nd} up-conversion signal 170. For example, if the offset information 162 corresponds to phase modulation data (e.g., Φₙ = tan⁻¹(A_{Q}/A_{I})), then the 2^{nd} up-conversion signal 170 may be expressed as ½ cos(ω_{RF} - ω_{dn} - Φₙ) - ½ cos(ω_{RF} + ω_{dn} + Φₙ).

The combining module 154 combines the 1^{st} and 2^{nd} up-conversion signals 168 and 170 to produce an RF signal 172. For instance, the combining module may subtract the 2^{nd} up-conversion signal 170 from the 1^{st} up-conversion signal 160 to produce the RF signal 172. From the above examples, ½ cos(ω_{RF} - ω_{dn} - Φₙ) + ½ cos(ω_{RF} + ω_{dn} + Φₙ) - [½ cos(ω_{RF} - ω_{dn} - (Φₙ) - ½ cos(ω_{RF} + ω_{dn} + Φₙ)] = cos(ω_{RF} + ω_{dn} + Φₙ).

The power amplifier circuit 156 amplifies the RF signal 172 based on the transmit property information 174 to produce the modulated RF signal. For example, if the transmit property information 174 corresponds to amplitude information (e.g., A = square root of (A_{I}² + A_{Q}²)), then the power amplifier circuit 156 amplifies the RF signal 172 (e.g., cos(ω_{RF} + ω_{dn} + Φₙ) by A to produce the modulated RF signal 176 (e.g., Acos(ω_{RF} + ω_{dn} + Φₙ)).

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "coupled to" and/or "coupling" and/or includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" indicates that an item includes one or more of power connections, input(s), output(s), etc., to perform one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

## Claims

1. A transmitter comprises:
a conversion module coupled to convert a wireless protocol formatted signal into a normalized in-phase (I) symbol and a normalized quadrature (Q) symbol;
a modulation parameter module coupled to generate offset information and transmit property information from the wireless protocol formatted signal;
a first up-conversion module coupled to generate a first up-conversion signal based on the normalized I symbol, an in-phase local oscillation, and the offset information;
a second up-conversion module coupled to generate a second up-conversion signal based on the normalized Q symbol, a quadrature local oscillation, and the offset information;
a combining module coupled to combine the first and second up-conversion signals to produce a radio frequency (RF) signal; and
a power amplifier circuit coupled to transmit the RF signal based on the transmit property information to produce a modulated RF signal.

2. The transmitter of claim 1 further comprises:
a baseband processing module coupled to convert outbound data into the wireless protocol formatted signal in accordance with a wireless communication protocol.

3. The transmitter of claim 2, wherein the wireless communication protocol comprises at least one of:
at least one version of code division multiple access;
at least one version of IEEE 802.11;
at least one version of Bluetooth;
at least one version of phase shift keying; and
at least one version of minimum shift keying.

4. The transmitter of claim 1, wherein the offset information comprises at least one of:
phase information; and
frequency information.

5. The transmitter of claim 4 comprises:
the phase information including phase modulation data; and
the frequency information including at least one of: frequency modulation data, frequency hopping data, and channel selection data.

6. A transmitter comprises:
a baseband processing module coupled to produce normalized modulated symbol data, offset information, and transmit property information based on outbound data;
an up-conversion module coupled to produce a radio frequency (RF) signal from the normalized modulated symbol data, a local oscillation, and the offset information; and
a power amplifier circuit operably coupled to transmit the RF signal based on the transmit property information to produce a modulated RF signal.

7. The transmitter of claim 6, wherein the baseband processing module derives the normalized modulated symbol data from the outbound data being initially processed in accordance with at least one of:
at least one version of code division multiple access;
at least one version of IEEE 802.11;
at least one version of Bluetooth;
at least one version of phase shift keying; and
at least one version of minimum shift keying.

8. The transmitter of claim 6, wherein the offset information comprises at least one of:
phase information; and
frequency information.

9. A wide bandwidth transmitter comprises:
a baseband processing module coupled to convert outbound data into code division multiple access WCDMA formatted data or Enhanced Data rates for GSM Evolution (EDGE) formatted data;
a conversion module coupled to convert the WCDMA formatted data or EDGE formatted data into a normalized in-phase (I) symbol and a normalized quadrature (Q) symbol;
a modulation parameter module coupled to generate offset information and transmit property information from the WCDMA formatted data or EDGE formatted data;
a first up-conversion module coupled to generate a first up-conversion signal based on the normalized I symbol, an in-phase local oscillation, and the offset information;
a second up-conversion module coupled to generate a second up-conversion signal based on the normalized Q symbol, a quadrature local oscillation, and the offset information;
a combining module coupled to combine the first and second up-conversion signals to produce a radio frequency (RF) signal; and
a power amplifier circuit coupled to transmit the RF signal based on the transmit property information to produce a modulated RF signal.

10. The wide bandwidth transmitter of claim 9, wherein the offset information comprises at least one of:
phase information; and
frequency information.
